# FASCICULE DE BREVET EUROPEEN

(11) **EP 1 369 073 B1**
(45) Date de publication et mention de la délivrance du brevet: **22.08.2007**
(21) Numéro de dépôt: 03356080.6
(22) Date de dépôt: 27.05.2003
(51) Int. Cl.: A47J 37/08

(54) **Chariot porte pain perfectionné pour grille-pain**
Verbesserter Brotschlitten für Brotröster
Improved bread carriage for toaster

(30) Priorité: 05.06.2002 FR 0206919
(43) Date de publication de la demande: 10.12.2003
(73) Titulaire: SEB S.A., 69130 Ecully (FR)
(72) Inventeur: Marx, Dominique, 88190 Golbey (FR)
(74) Mandataire: Kiehl, Hubert

(56) Documents cités:
- DE-U- 1 909 749
- FR-A- 1 373 560
- US-A- 1 587 023
- US-A- 3 986 444

## Description

La présente invention se rapporte au domaine des appareils électriques de cuisson de type grille-pain et vise plus particulièrement à l'amélioration des supports de pain dans de tels appareils.

Les supports de pain dans les grille-pain, encore appelés chariots porte pain, peuvent prendre différentes formes et différents profils pour permettre la retenue des tranches de pain. Le document FR 1 373 560 montre un support composé notamment d'un fil métallique traversant la chambre de chauffe et configuré en un zig-zag horizontal, offrant ainsi globalement une surface d'appui des tranches de pain mises à griller.

Le document FR 2 270 828 présente une autre variante de réalisation du chariot porte pain. Ce dernier comporte une partie étroite et rectiligne traversant la chambre de chauffe sur laquelle sont disposées des saillies latérales dirigées vers le haut et régulièrement espacées le long du chariot. Le chariot ainsi que les fentes peuvent être réalisées indépendamment et assemblées par soudage par points.

Si de telles solutions s'avèrent efficaces pour la tenue du pain, de telles configurations nécessitent l'utilisation d'un écran réflecteur sous le chariot porte pain afin que la partie inférieure du grille-pain, généralement en plastique, ne soit pas détériorée par la chaleur dégagée par les éléments chauffants. Ce problème est d'autant plus important lorsque le réflecteur constitue un tiroir ramasse-miettes amovible puisqu'il faut alors prévoir une sécurité pour empêcher le fonctionnement du grille-pain lorsque le tiroir n'est pas remis dans son logement. Une autre solution consiste à disposer d'un réflecteur indépendant du tiroir ramasse miettes, tel que décrit dans le brevet FR 2 430 749, entre le chariot et le tiroir, ce qui augmente les coûts de montage du grille-pain.

Un autre grille-pain est décrit dans le document DE 1909749U. Ce document est considéré représenter l'état de la technique le plus proche.

La présente invention vise à améliorer les dispositifs existants tout en simplifiant la construction générale du grille-pain. La présente invention est atteinte à l'aide d'un grille-pain tel que décrit dans la revendication 1.

Le fait d'associer les moyens de retenue des tranches de pain à un réflecteur sur le chariot porte pain permet de constituer un sous-ensemble indépendant offrant en outre une protection thermique au niveau de la partie inférieure du grille-pain. Ainsi, quelle que soit la configuration finale du grille-pain, ce dernier est forcément muni d'un réflecteur inférieur. Ceci est également important lorsqu'un tiroir ramasse-miettes est présent, puisqu'il n'est alors plus utile de disposer d'une sécurité afin d'éviter l'alimentation des éléments chauffants lorsque le tiroir n'est pas dans son logement. De plus, un tel tiroir, s'étendant sensiblement sous la chambre de chauffe, peut alors être entièrement en plastique.

Avantageusement, le réflecteur du chariot porte pain occupe sensiblement la largeur de la chambre de chauffe, ce qui permet de réfléchir au maximum le rayonnement en provenance des éléments chauffants. Ainsi, lorsque le chariot porte pain est abaissé dans une position de grillage du pain, le réflecteur dudit chariot ferme en quelque sorte la chambre de chauffe en partie inférieure.

Dans une version avantageuse de réalisation de l'invention, le réflecteur du chariot porte pain a un profil en V inversé en présentant deux bras obliques orientés vers le bas. Cette configuration, compte tenu de la localisation des éléments chauffants, de part et d'autre du réflecteur du chariot, évite que la réflexion ne soit re-dirigée vers le pain, ce qui pourrait provoquer un sur-grillage local des tranches de pain.

Avantageusement, le réflecteur du chariot porte pain comporte des ouvertures de circulation d'air régulièrement réparties sur sa longueur. De telles ouvertures sont favorables pour une bonne évacuation de l'humidité résiduelle des tranches de pain lors de l'opération de grillage.

Selon l'un des modes de réalisation de l'invention, les moyens de retenue sont composés d'une partie rectiligne traversant la chambre de chauffe sur laquelle sont disposées des saillies latérales dirigées vers le haut et régulièrement espacées le long du chariot. Une telle réalisation est d'autant plus intéressante dans la présente invention lorsque les saillies sont issues de la tôle formant le réflecteur du chariot porte pain, la découpe ainsi réalisée formant des ouvertures de circulation d'air. En effet, une telle structure est simple et rapide à réaliser, sans assemblage entre le réflecteur du chariot et les moyens de retenue, ce qui limite les coûts de production.

Selon un autre mode de réalisation de l'invention, les moyens de retenue sont constitués par un fil plié sinuant d'un bord à l'autre de la chambre de chauffe.

La présente invention sera mieux comprise à l'aide de la description suivante, en relation avec les figures annexées, parmi lesquelles :
- la figure 1 est une vue simplifiée en coupe d'un grille-pain équipé de la présente invention,
- la figure 2 est une vue détaillée du chariot porte pain dans une vue en élévation de face,
- la figure 3 est une vue en perspective de côté du chariot porte pain selon l'invention dans son intégralité.

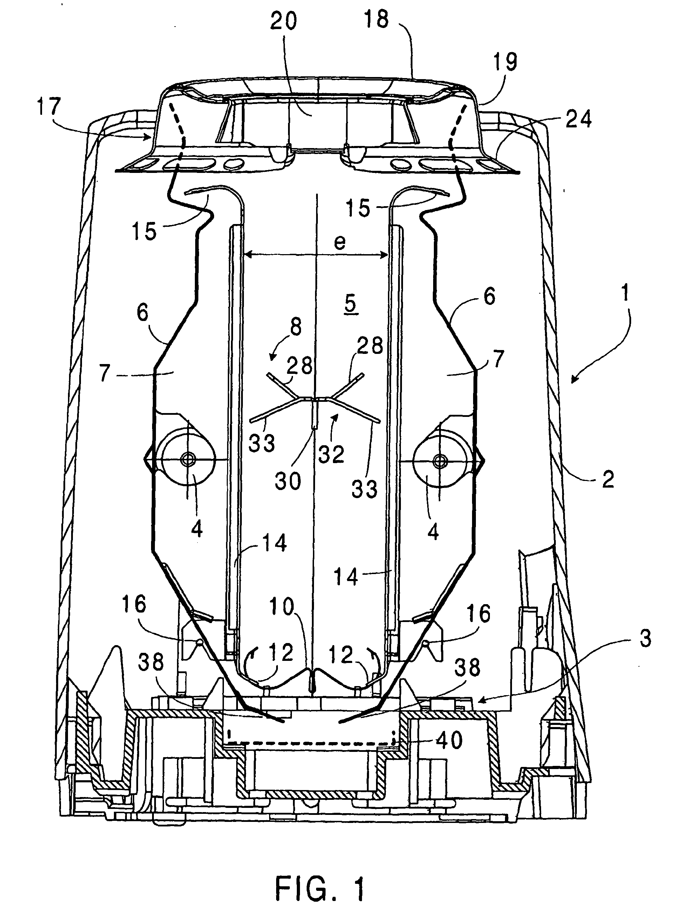

Un grille-pain 1 équipé de la présente invention est illustré figure 1. Ce grille-pain comporte un boîtier 2 possédant une ouverture supérieure et à l'intérieur duquel est agencé un bâti 3 composé notamment de deux réflecteurs 6 longitudinaux ainsi que deux parois transversales 7 munies d'encoches dans lesquelles sont positionnés des éléments chauffants 4. Deux grilles 14 définissent une chambre de chauffe 5, de largeur e, ouverte vers les parties inférieure et supérieure du grille-pain.

Les grilles de serrage 14 sont articulées autour d'un point 16 et possèdent une partie courbe 12 à leur extrémité située dans la partie basse du grille-pain, ladite partie courbe 12, orientée vers l'intérieur de la chambre, étant localisée à proximité de l'une ou l'autre des parois transversales 7. Dans cette zone se trouve également une lame ressort 10 susceptible d'être déplacée par un chariot porte pain 8 lorsque ce dernier est amené dans la partie basse du grille-pain.

Les grilles de serrage 14, à leur extrémité opposée, c'est à dire dans le haut de la chambre de chauffe, sont courbées de telle sorte à présenter un rebord 15 sensiblement perpendiculaire au plan défini par les grilles, ce rebord étant orienté vers l'extérieur de la chambre.

Au niveau de l'ouverture du boîtier, dans sa partie supérieure, est agencé un toit comprenant une tôle 17 présentant une ouverture principale 20 en correspondance avec l'ouverture de la chambre de chauffe 5, un rebord 18, ainsi qu'une paroi verticale 19. A sa base, le toit présente une collerette 24 périphérique localisée à l'intérieur du boîtier 2. Un tel toit est plus amplement détaillé dans la demande WO 01/78567 au nom du Demandeur. Il est bien entendu que la présente invention s'applique également aux grille pain et aux toaster ne comportant pas de toit réchauffeur.

Tel qu'il apparaît aux figures 1 à 3, le chariot porte pain 8 comprend des saillies latérales 28 dirigées vers le haut, l'ensemble de ces saillies ayant pour fonction la retenue des tranches de pain mises à griller. Selon l'invention, le chariot porte pain est muni d'un réflecteur 32 ayant la forme d'un V inversé, c'est à dire que la section de ce réflecteur est composée de deux bras obliques 33 orientés vers le bas du grille-pain.

Une partie rectiligne et effilée 30 est proéminente à l'une des extrémités du chariot et assure le guidage vertical de ce dernier dans une rainure prévue à cet effet. A l'autre extrémité du chariot porte pain, une extension 36 essentiellement verticale assure d'une part la liaison mécanique du chariot avec d'autres éléments du grille-pain, et notamment avec une poignée d'actionnement du chariot porte pain, et d'autre part permet le serrage des grilles sur les tranches de pain mises à griller.

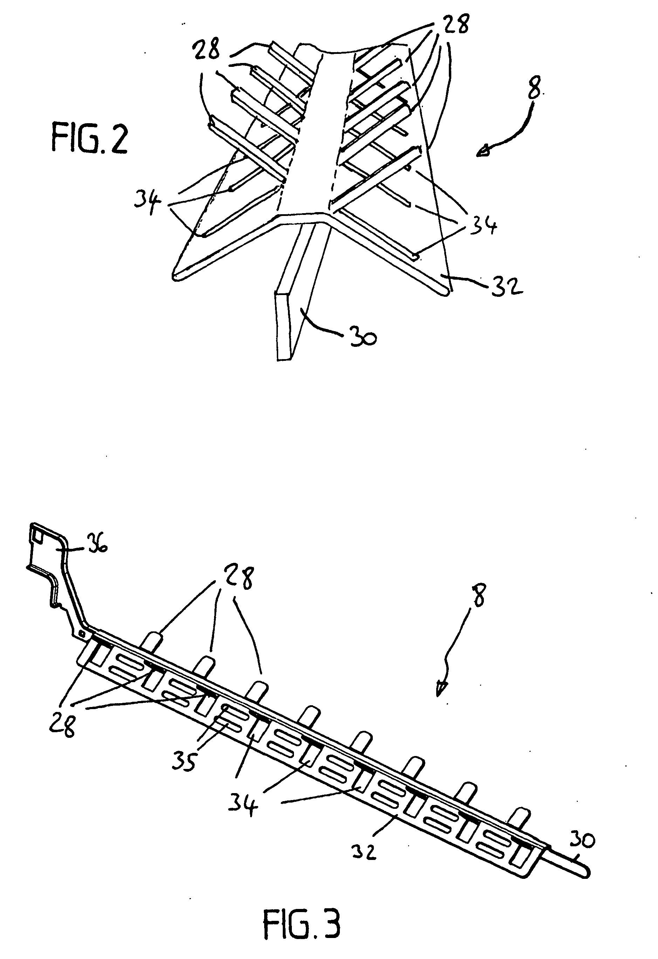

Avantageusement, tel qu'il est bien visible aux figures 2 et 3, les saillies 28 sont obtenues par découpe de la partie réflecteur du chariot porte pain, les parties découpées étant ensuite repliées vers le haut afin d'obtenir la configuration présentée. Cette opération permet également de ménager des ouvertures 34 dans le réflecteur, ce qui est favorable à une bonne évacuation de l'humidité contenue dans les tranches de pain lors du grillage de ces dernières. Ces ouvertures peuvent être complétées par des ouvertures longitudinales 35, selon la configuration du grille-pain et la puissance de chauffe mise en jeu.

En fonctionnement, lorsque le chariot porte pain est abaissé, la partie basse de l'extension 36, par coopération avec la lame ressort 10, permet aux grilles 14 de pivoter autour des points 16 pour se plaquer sur les tranches de pain mises à griller. La partie réflecteur 32 du chariot porte pain, en étant située sous les supports 28, ne vient pas perturber cette rotation, le pivotement étant réalisé légèrement au dessus des extrémités du réflecteur. Ce dernier ferme donc en partie basse la chambre de chauffe et protège ainsi la partie inférieure du grille-pain du rayonnement thermique des éléments chauffants.

Dans la configuration présentée, le chariot porte pain/réflecteur est associé à une forme spécifique des réflecteurs 6 qui, en partie basse, présentent une partie faiblement inclinée 38 contribuant à fermer légèrement la chambre de grillage en recouvrant partiellement la partie réflecteur du chariot porte pain lorsque ce dernier est en position abaissée.

De la sorte, la partie inférieure du grille-pain est thermiquement protégée du rayonnement des éléments chauffants, ce qui évite de prévoir une sécurité pour éviter le fonctionnement du grille-pain sans le tiroir ramasse miettes. De plus, un tel tiroir, représenté figure 1 en pointillés par la référence 40, peut être entièrement en plastique, ce qui réduit son coût de fabrication.

## Revendications

1. Grille-pain (1) comportant au moins une chambre de chauffe (5) munie, sur deux côtes latéraux opposés d'éléments chauffants (4), et ouverte en partie supérieure du grilfe-pain (1), ledit grille-pain (1) comportant également un chariot porte pain (8) s'étendant sensiblement honzontalement dans la chambre de chauffe (5), parallélement aux éléments chauffants (4), ledit chariot (8) comportant des moyens de retenue des tranches de pain mises à griller, **caractérisé en ce que** le chariot porte pain est muni d'un réflecteur (32) fixe sous ces moyens de retenue afin de réduire le rayonnement des éléments chauffants (4) vers la partie inférieure du grille-pain (1).

2. Grille-pain (1) selon la revendication précédente, **caractérisé en ce que** le réflecteur (32) du chariot porte pain (8) occupe sensiblement la largeur (e) de la chambre de chauffe (5).

3. Grille-pain (1) selon la revendication précédente, **caractérisé en ce que** le réflecteur (32) du chariot porte pain (8) a un profil en V inversé en présentant deux bras obliques (33) orientés vers le bas.

4. Grille-pain (1) selon la revendication précédente, **caractérisé en ce que** le réflecteur (32) du chariot porte pain (8) comporte des ouvertures (34, 35) de circulation d'air régulièrement réparties sur sa longueur.

5. Grille-pain (1) selon l'une des revendications précédentes, **caractérisé en ce que** les moyens de retenue sont composés d'une partie rectiligne traversant la chambre de chauffe (5) sur laquelle sont disposées des saillies latérales (28) dirigées vers le haut et régulièrement espacées le long du chariot (8).

6. Grille-pain (1) selon la revendication précédente, **caractérisé en ce que** les saillies (28) sont issues de la tôle formant réflecteur (32), la découpe ainsi réalisée formant des ouvertures (34) de circulation d'air.

7. Grille-pain (1) selon l'une des revendications 1 à 4, **caractérisé en ce que** les moyens de retenue sont constitués par un fil plié sinuant d'un bord à l'autre de la chambre de chauffe (5).

8. Grille-pain (1) selon l'une des revendications précédentes, **caractérisé en ce qu'**il comporte un tiroir ramasse miettes (40) s'étendant sensiblement sous la chambre de chauffe (5), ledit tiroir (40) étant entièrement en plastique.

## Claims

1. A toaster (1) including at least one toasting chamber (5) that is provided, on two opposite lateral sides with heater elements (4), and that is open in the top portion of the toaster (1), said toaster (1) also including a bread carriage (8) extending substantially horizontally in the toasting chamber (5) parallel to the heater elements (4), said carriage (8) including means for retaining slices of bread put into place for toasting, the toaster being **characterized in that** the bread carriage is provided with a reflector (32) fastened under the retaining means in order to reduce the radiation from the heater elements (4) towards the bottom portion of the toaster (1).

2. A toaster (1) according to the preceding claim, **characterized in that** the reflector (32) of the bread carriage (8) occupies substantially the width (e) of the toasting chamber (5).

3. A toaster (1) according to the preceding claim, **characterized in that** the reflector (32) of the bread carriage (8) has an upside-down V-shaped profile, presenting two downwardly directed sloping arms (33).

4. A toaster (1) according to the preceding claim, **characterized in that** the reflector (32) of the bread carriage (8) has air flow openings (34, 35) regularly distributed along its length.

5. A toaster (1) according to any preceding claim, **characterized in that** the retaining means are made up of a rectilinear portion extending across the toasting chamber (5) on which upwardly-directed lateral projections (28) are disposed that are regularly spaced along the carriage (8).

6. A toaster (1) according to the preceding claim, **characterized in that** the projections (28) come from the sheet forming the reflector (32), with the cutouts made in this way constituting the air flow openings (34).

7. A toaster (1) according to any one of claims 1 to 4, **characterized in that** the retaining means are constituted by a folded wire extending sinuously from one side of the toasting chamber (5) to the other.

8. A toaster (1) according to any preceding claim, **characterized in that** it includes a crumb-collector drawer (40) substantially under the toasting chamber (5), said drawer (40) being made entirely of plastics material.

## Patentansprüche

1. Toaster (1) mit mindestens einer Heizkammer (5), die an zwei gegenüberliegenden Seitenflächen mit Heizelementen (4) versehen und im oberen Teil des Toasters (1) offen ist, wobei der Toaster (1) auch einen Brothalterschlitten (8) aufweist, der sich in der Heizkammer (5) im Wesentlichen waagerecht und parallel zu den Heizelementen (4) erstreckt, wobei der Schlitten (8) Mittel zum Halten von zu röstenden Brotscheiben aufweist, **dadurch gekennzeichnet, dass** der Brothalterschlitten mit einem Reflektor (32) versehen ist, der unter diesen Haltemitteln befestigt ist, um die Strahlung der Heizelemente (4) zum unteren Teil des Toasters (1) zu verringern.

2. Toaster (1) nach dem vorhergehenden Anspruch, **dadurch gekennzeichnet, dass** der Reflektor (32) des Brothalterschlittens (8) im Wesentlichen die Breite (e) der Heizkammer (5) einnimmt.

3. Toaster (1) nach dem vorhergehenden Anspruch, **dadurch gekennzeichnet, dass** der Reflektor (32) des Brothalterschlittens (8) ein Profil in Form eines umgedrehten V hat, wobei er zwei schräge Arme (33) aufweist, die nach unten gerichtet sind.

4. Toaster (1) nach dem vorhergehenden Anspruch, **dadurch gekennzeichnet, dass** der Reflektor (32) des Brothalterschlittens (8) Luftzirkulationsöffnungen (34, 35) aufweist, die gleichmäßig auf seiner Länge verteilt sind.

5. Toaster (1) nach einem der vorhergehenden Ansprüche, **dadurch gekennzeichnet, dass** die Haltemittel aus einem geraden Teil bestehen, der die Heizkammer (5) durchquert und an dem seitliche Vorsprünge (28) angeordnet sind, die nach oben gerichtet und in gleichmäßigen Abständen entlang dem Schlitten (8) angeordnet sind.

6. Toaster (1) nach dem vorhergehenden Anspruch, **dadurch gekennzeichnet, dass** die Vorsprünge (28) aus dem den Reflektor (32) bildenden Blech hervorgehen, wobei der so realisierte Ausschnitt Luftzirkulationsöffnungen (34) bildet.

7. Toaster (1) nach einem der Ansprüche 1 bis 4, **dadurch gekennzeichnet, dass** die Haltemittel durch einen gefalteten Draht gebildet sind, der sich von einem Rand der Heizkammer (5) zum anderen schlängelt.

8. Toaster (1) nach einem der vorhergehenden Ansprüche, **dadurch gekennzeichnet, dass** er ein Schubfach (40) zum Auffangen der Krümel aufweist, das sich im Wesentlichen unter der Heizkammer (5) erstreckt, wobei das Schubfach (40) vollständig aus Kunststoff besteht.
